# FASCICULE DE BREVET EUROPEEN

(11) **EP 3 740 903 B1**
(45) Date de publication et mention de la délivrance du brevet: **01.03.2023**
(21) Numéro de dépôt: 19712253.4
(22) Date de dépôt: 10.01.2019
(51) Int. Cl.: G06K 7/01, G06K 7/14, G06K 19/08, G06K 19/10, G06K 19/06

(54) **PROCÉDÉ D'AUTHENTIFICATION D'UNE SIGNATURE TRIDIMENSIONNELLE**
VERFAHREN ZUR AUTHENTIFIZIERUNG EINER DREIDIMENSIONALEN SIGNATUR
METHOD FOR AUTHENTICATING A THREE-DIMENSIONAL SIGNATURE

(30) Priorité: 16.01.2018 FR 1870038; 10.10.2018 FR 1871159
(43) Date de publication de la demande: 25.11.2020
(73) Titulaire: Guigan, Franck, 75017 Paris (FR)
(72) Inventeur: Guigan, Franck, 75017 Paris (FR)
(74) Mandataire: IP Trust
(86) Numéro de dépôt international: PCT/FR2019/000002
(87) Numéro de publication internationale: WO 2019/141915

(56) Documents cités:
- WO-A1-2012/136902
- FR-A3- 2 973 912
- FR-A3- 2 977 349
- US-A1- 2004 112 962

## Description

### Domaine technique

La présente invention est un procédé d'authentification qui permet de vérifier l'authenticité d'un objet quelconque, comme par exemple un document imprimé, un produit industriel ou une oeuvre d'art, en comparant les caractéristiques d'une de ses parties dite dispositif d'authentification avec un enregistrement qui en a été fait préalablement. Elle permet aussi l'authentification sécurisée de marquages impossibles à reproduire, dont il faut avoir l'original en mains pour réaliser des transactions de toutes sortes (ex. paiement, signature, identification, autorisation).

### Problème technique

La présente invention est un perfectionnement de la demande PCT/FR2012/000096 de Franck Guigan [FR] avec une priorité du 5 Avril 2011, délivrée aux Etats Unis d'Amérique sous le numéro US 9,058,535.

Dans l'une de ses mises en oeuvre, ce brevet est un procédé d'authentification consistant à établir une description dite ultérieure d'un dispositif d'authentification 1 comportant un ensemble dit marquage 11 comportant lui-même des éléments perturbant la lumière dits perturbateurs 111, 112 et suivants, et à comparer cette description avec une description dite originale dudit dispositif d'authentification 1, caractérisé en particulier en ce que la procédure permettant d'établir ladite description ultérieure et de faire ladite comparaison comporte la détermination par un moyen dit moyen de positionnement 7 coopérant avec une structure graphique reconnaissable dite marqueur 2 de la position en trois dimensions dans laquelle se trouve ledit moyen d'acquisition 3 par référence audit dispositif d'authentification 1, de réaliser une première acquisition depuis cette position dite point de vue original, et une acquisition dite supplémentaire réalisée depuis un point de vue sensiblement différent dudit point de vue original.

L'objectif de la présente invention est d'élargir le domaine dans lequel il faut placer l'appareil photographique pour réaliser la première acquisition, et d'utiliser cet élargissement pour permettre de s'identifier en ligne aux personnes utilisant le dispositif d'authentification comme identifiant personnel.

### Technique antérieure

On connaît PCT/FR2012/000096 précitée de Franck Guigan [FR] avec une priorité du 5 Avril 2012, délivrée aux États-Unis d'Amérique sous le numéro US 9,058,535, ainsi que les brevets ou demandes de brevets cités dans cette demande et dans son rapport de recherche

On connaît dans l'état de la technique le brevet FR2977349 concernant un procédé d'acquisition d'un code-barres 3d consistant à établir un ou plusieurs couples valides [description, position] associant une description à une position du moyen d'acquisition par rapport au dispositif d'authentification.

On connait aussi le brevet FR2973912 concernant un système d'authentification comprenant d'une part un dispositif d'identification comprenant lui-même un dispositif dit "décodeur optique" comportant des zones dénommées "zones de décodage", déviant ou non les rayons lumineux à travers, et un dispositif dit "codé ensemble "comprenant plusieurs zones dénommées" zones de codage "qui réfléchissent et / ou transmettent la lumière de différentes manières, et d'autre part une base de données établissant une relation entre un code de référence attribué au dispositif d'identification et au moins une description informatique d'une vue dudit dispositif acquise depuis au moins un point de vue défini par rapport audit dispositif d'identification par un moyen d'acquisition optique connu. Le système comprend des moyens de comparaison avec ladite description dudit dispositif d'identification dans ladite base de données d'une description informatique d'une vue d'un dispositif d'identification acquise dudit point de vue d'origine par un moyen d'acquisition optique à distance connu.

Le brevet WO2012/136902 décrit un procédé d'authentification d'un objet protégé par un code-barre de sécurité consistant à comparer la description faite après son impression, stockée dans une base de données, avec une nouvelle description résultant d'au moins deux acquisitions, l'une dans les mêmes conditions, et l'autre en changeant le point de vue défini en trois dimensions, et/ou l'éclairage. Dans sa version préférée, un code-barres ne peut pas être imprimé pour représenter un nombre prédéterminé. Il est également impossible à reproduire.

Le brevet US2004/112962 décrit un système de sécurité comprenant plusieurs étiquettes de sécurité, chacune de ces étiquettes contenant plusieurs particules distribuées de façon aléatoire dans une matrice émettant un rayonnement lumineux, à mettre en oeuvre un lecteur comprenant des moyens de projection de rayonnement lumineux, d'une ou de plusieurs longueurs d'ondes, sur une étiquette de sécurité ainsi que des moyens d'interprétation du rayonnement lumineux réfléchi et/ou réfracté et/ou diffracté par les particules dans la matrice, et à présenter ces étiquettes au lecteur.

### Brève description des dessins

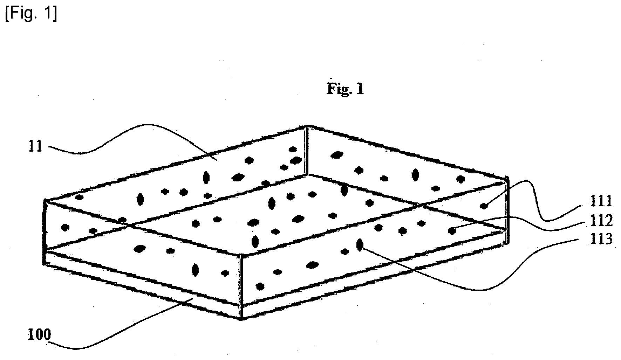

L'invention sera bien comprise, et d'autres buts, avantages et caractéristiques de celle-ci apparaîtront plus clairement à la lecture de la description qui va suivre, laquelle est illustrée par la figure 1.
[fig.1] représente un dispositif d'authentification 1 du procédé d'authentification selon l'invention, constitué d'un support d'impression 100 et d'un marquage 11 composé d'une couche transparente dans laquelle sont noyées des perturbateurs 111, 112 et suivants

### Exposé de l'invention

La présente invention est un procédé d'authentification selon la revendication 1. Description détaillée de l'invention

Le principe de la présente invention consiste à établir non pas une mais plusieurs descriptions 2D originales du dispositif d'authentification 1, pour disposer d'une description 2D originale correspondant à un point de vue proche de celui sous lequel on observe le dispositif lors de la procédure d'authentification, sans avoir besoin de placer le moyen d'acquisition à un emplacement précis.

Cette technique consistant à établir plusieurs descriptions 2D originales est déjà décrite dans le document PCT/FR2012/000096 précité, mais avec une finalité différente : « Il est aussi possible que plusieurs descriptions originales du dispositif d'authentification 1, correspondant à des points de vue différents ou à des éclairages différents, soient conservées dans ladite base de données. Cela a pour effet d'augmenter le nombre de combinaisons possibles. Pour rendre la fraude plus difficile, cela demande de réaliser plusieurs comparaisons avec plusieurs descriptions originales, à partir de points de vue ou de caractéristiques d'éclairages qui diffèrent d'une comparaison à la suivante. ».

Selon la présente invention, plusieurs descriptions 2D originales ont été établies à partir d'acquisitions réalisées depuis des points de vue différents les uns des autres définis par référence audit dispositif d'authentification, mais ces points de vue sont voisins, et une description 2D ultérieure est comparée avec une des descriptions 2D originales établie à partir d'une acquisition réalisée depuis un point de vue parmi les plus proches du point de vue depuis lequel est établie ladite description 2D ultérieure par référence audit dispositif d'authentification. Avantageusement, on choisit la description 2D originale correspondant au point de vue le plus proche, mais ce n'est pas indispensable, car on peut aussi comparer la description 2D ultérieure avec plusieurs descriptions 2D originales.

Le dispositif d'authentification peut comporter un identifiant comme un numéro de série, sous forme de chiffres et/ou de lettres, ou sous forme d'un code-barres, mais ce n'est pas indispensable. En revanche, il doit comporter un ensemble dit marquage 11 comportant lui-même des éléments perturbant la lumière dits perturbateurs 111, 112 et suivants, qui sont des caractéristiques du dispositif d'authentification. Ce marquage peut être un par exemple un hologramme identique pour une série de produits, mais il peut aussi d'agir d'un ensemble de perturbateurs disposés aléatoirement sur ou dans le marquage 11. 11 peut aussi s'agir de caractéristiques naturelles de l'objet à authentifier.

Comme pour PCT/FR2012/000096, les perturbateurs peuvent être des détails, même peu visibles, du support d'impression sur lequel est imprimée une marque ou tout autre identifiant comme un numéro de série ou un code-barres. Ils peuvent aussi être des particules de toutes natures protégées par une couche de vernis ou imprimés au verso d'un support d'impression transparent. On peut aussi, comme représenté à la figure 1, incorporer des perturbateurs 111, 112 et suivants dans un bloc d'une substance transparente, par exemple une carte en plastique ou un porte-clés.

Les perturbateurs peuvent être répartis en sous-ensembles, lesquels peuvent être contigus, la notion de module étant déterminée au moment de l'établissement de la description 2D, par exemple parce qu'une acquisition est faite à l'aide d'un appareil photographique stockant ses informations sous forme de damiers de pixels juxtaposés.

L'avantage de la présente invention est d'élargir le domaine dans lequel il faut placer l'appareil photographique pour réaliser une acquisition lors de la procédure d'authentification, pour améliorer le confort de l'utilisateur.

Avantageusement, le dispositif d'identification est stabilisé, c'est-à-dire que son apparence varie suffisamment pèu lorsqu'il est vu depuis des points de vue voisins proches d'un point de vue dit original, de telle sorte que ledit dispositif peut être reconnu comme suffisamment semblable à la description originale depuis la plupart desdits points de vue voisins. On appelle ci-après « domaine de vision d'un point de vue original » l'ensemble des points de vue voisins d'un point de vue original depuis lesquels le dispositif peut ainsi être reconnu.

Ceci peut être obtenu facilement par l'homme de l'art, par exemple selon l'une des méthodes exposées dans le document PCT/FR2012/000096 précité, avec diffusant optique ou des perturbateurs 111, 112 dont la surface diffuse la lumière qu'elle réfléchit, comme par exemple un dépoli ou des microstructures comme un hologramme par réflexion. [18] Pour augmenter le confort de l'utilisateur lors d'une procédure d'authentification, il est souhaitable que les domaines de vision d'un point de vue original forment un domaine sensiblement continu. L'utilisateur peut alors placer le moyen d'acquisition à peu près n'importe où dans un domaine assez vaste.

Il est avantageux d'établir la comparaison d'une description 2D ultérieure non pas avec une seule description 2D originale, mais avec plusieurs. Il faut pour cela que l'homme de l'art utilise des algorithmes adaptés, par exemple en retenant ce qui est commun entre deux descriptions 2D originales établies depuis plusieurs points de vue voisins l'un de l'autre, pour en déduire par le calcul une description 2D originale correspondant à un point de vue intermédiaire.

Cette méthode peut être perfectionnée, en reconstituant à partir de plusieurs descriptions 2D originales une description 2D tridimensionnelle du marquage. Il existe aujourd'hui de nombreux logiciels permettant de décrire un objet en trois dimensions, et de nombreux formats de fichier qui sont adaptés à une telle opération. L'avantage est alors que l'homme de l'art peut prédire l'apparence du dispositif d'authentification depuis une pluralité de points de vue différents, et que l'utilisateur peut réaliser une procédure d'authentification en plaçant le moyen d'acquisition à un emplacement imprévu au départ.

Une telle description 3D peut être utilisée aussi bien pour valider une description 2D ultérieure issue d'une acquisition unique que pour valider plusieurs descriptions 2D ultérieures issues de plusieurs acquisitions, ou d'une une description ultérieure calculée qui est elle aussi tridimensionnelle. Lors de la procédure d'authentification, il suffit d'un léger déplacement du moyen d'acquisition des images, le plus souvent un smartphone, pour pouvoir réaliser plusieurs acquisitions ou une telle acquisition tridimensionnelle avec des procédés connus. Le fait que le smartphone soit tenu à la main suffit pour que ce déplacement soit obtenu naturellement, mais on peut évidemment demander à l'utilisateur de déplacer le moyen d'acquisition s'il est trop immobile.

Dans un mode perfectionné, la procédure d'authentification peut comporter plusieurs acquisitions successives, soit pour en trouver rapidement une qui soit pertinente pour être comparée avec une des descriptions 2D originales, soit pour effectuer plusieurs comparaisons, soit pour ces deux raisons. Avantageusement ces acquisitions successives constituent une vidéo. Cette vidéo peut être transmise en l'état à un serveur dit serveur d'authentification, ou traitée localement pour en extraire une ou plusieurs descriptions 2D ultérieures.

Avantageusement, elle est transmise en temps réel à un serveur dit serveur d'authentification. Il n'est dès lors pas nécessaire de disposer d'une application spécifique pour faire parvenir cette vidéo au serveur d'authentification puisqu'une application standard de messagerie permettant la vidéo peut suffire (ex. Snapchat, Messenger, etc.). Elle peut aussi analysée en temps réel par le dispositif d'authentification s'il comprend un ordinateur.

Le procédé peut comprendre une étape d'indication à l'utilisateur d'un point de vue préféré pour réaliser l'une au moins des acquisitions ultérieures, ou de plusieurs points de vue à partir desquels réaliser successivement des acquisitions ultérieures.

Avantageusement le procédé comporte la commande au dispositif d'acquisition d'images de l'utilisateur de l'instruction d'allumer ou d'éteindre son flash.

La présente invention permet de réaliser une identification en ligne de l'utilisateur, en rendant impossible pour un pirate de capturer la transaction sur un réseau comme Internet et de la rejouer ensuite, connaissant ainsi les réponses à apporter aux questions.

Plusieurs descriptions originales correspondant à différents points de vue originaux sont conservées dans un serveur, lequel choisit au hasard quelques points de vue, parmi des milliers de points de vue possibles autour du marquage 11, et demande à l'utilisateur de passer de l'un à l'autre dans une séquence qu'il a choisie au hasard.

Chaque description ultérieure établie à partir d'un des multiples points de vue composant la trajectoire du moyen d'acquisition, le flash étant allumé et éteint en permanence, est utilisée par l'algorithme du serveur pour voir si, en fonction de la distance entre le point de vue et le point de vue initial, la différence entre l'aspect de la signature est acceptable ou non. [28] Il existe donc des milliards de combinaisons possibles de points de vue demandés et de points de vue effectifs vus par le moyen d'acquisition. Ce que le pirate informatique devrait trouver, ce sont les descriptions originales, ce qui serait très difficile car elles ne sont pas identiques aux points de vue aléatoires requis par le serveur. Il est ainsi pratiquement impossible de rejouer une transaction capturée.

Les points de vue à partir desquels réaliser successivement des acquisitions dites ultérieures sont avantageusement déterminés aléatoirement.

Les moments auxquels le moyen d'acquisition doit allumer ou éteindre son flash peuvent eux-aussi être déterminés aléatoirement.

Dans une version perfectionnée, un marquage comporte deux zones dont l'une change plus d'apparence que l'autre pour un même déplacement du point de vue. Il comporte une première zone dédiée à l'acquisition par un moyen d'acquisition qui peut être tenu à la main, et une deuxième zone dédiée à l'acquisition par un moyen d'acquisition dont on maîtrise mieux la position. La deuxième zone peut être réservée à une vérification plus sélective de l'authenticité du marquage. Un distributeur de billets de banque, identifiant la personne souhaitant effectuer un retrait d'argent, utilisera par exemple la deuxième zone, alors qu'une personne souhaitant établir avec son smartphone tenu à la main l'identité d'une personne se présentant à son domicile comme étant un policier ou un pompier n'utilisera que la première zone.

Le moyen d'acquisition comporte avantageusement un moyen mécanique permettant de modifier le point de vue sous lequel est vu le marquage pour établir une description 2D ultérieure.

Pour éviter la fraude, le procédé d'authentification peut comporter une étape préliminaire, comme par exemple la frappe d'un code PIN, qui toit être achevée avec succès pour qu'une description 2D ultérieure puisse être établie. Ce code PIN peut être modifiable ou non. Il peut être indiqué dans l'identifiant ou fourni au moyen d'acquisition sur demande du moyen d'acquisition.

### Applications

Ce sont les mêmes que celles citées dans PCT/FR2012/000096

## Revendications

1. Procédé d'authentification comportant :
• L'enregistrement d'une pluralité de descriptions 2D originales du dispositif d'authentification (1) comportant des éléments perturbant la lumière dits perturbateurs (111 , 112), lesdites descriptions 2D originales correspondent à des points de vue différents les uns des autres dits points de vue voisins
• l'authentification consistant à établir une description 2D dite ultérieure d'un dispositif d'authentification (1) et à comparer cette description ultérieure avec une description dite originale dudit dispositif d'authentification,
**caractérisé en ce que** lors de la procédure d'authentification :
• on observe le dispositif d'authentification (1), sans avoir besoin de placer le moyen d'acquisition à un emplacement précis l'utilisateur pouvant réaliser une procédure d'authentification en plaçant le moyen d'acquisition à un emplacement imprévu au départ,
• on compare ladite description 2D ultérieure avec l'une desdites descriptions 2D originales établie à partir d'une acquisition réalisée avec un moyen d'acquisition depuis un point de vue parmi les plus proches du point de vue depuis lequel est établie ladite description 2D ultérieure dudit marquage, par référence audit dispositif d'authentification, étant précisé que l'on entend ci-avant par description 2D d'un marquage une description en deux dimensions de l'apparence dudit dispositif d'authentification depuis un point de vue déterminé.

2. Procédé d'authentification selon la revendication 1 **caractérisé en ce que** les domaines de vision desdits points de vue d'acquisition desdites descriptions originales forment un domaine sensiblement continu.

3. Procédé d'authentification selon l'une quelconque des revendications 1 et 2 **caractérisé en ce que** ladite comparaison de ladite description 2D ultérieure est faite avec plusieurs desdites descriptions 2D originales correspondant à des points de vue voisins.

4. Procédé d'authentification selon la revendication 1 **caractérisé en ce que** l'on reconstitue par calcul, à partir desdites descriptions 2D originales, une description en trois dimensions, dite description 3D originale dudit marquage (11).

5. Procédé d'authentification selon la revendication 4 **caractérisé en ce qu'**une description 2D ultérieure est comparée avec la description 2D correspondant au même point de vue, calculée à partir de ladite description 3D originale dudit marquage (11).

6. Procédé d'authentification selon l'une quelconque des revendications précédentes **caractérisé en ce que** plusieurs descriptions 2D ultérieures sont réalisées à partir de plusieurs acquisitions successives réalisées à partir de points de vue différents.

7. Procédé d'authentification selon la revendication 6 **caractérisé en ce que** lesdites acquisitions successives constituent une vidéo.

8. Procédé d'authentification selon la revendication 7 **caractérisé en ce que** cette vidéo est transmise en temps réel à un serveur dit serveur d'authentification.

9. Procédé d'authentification selon l'une quelconque des revendications précédentes **caractérisé en ce qu'**il comporte l'indication à l'utilisateur de plusieurs points de vue à partir desquels réaliser successivement lesdites acquisitions ultérieures.

10. Procédé d'authentification selon la revendication 9 **caractérisé en ce que** lesdits points de vue à partir desquels réaliser successivement lesdites acquisitions ultérieures sont déterminés aléatoirement.

11. Procédé d'authentification selon l'une quelconque des revendications précédentes **caractérisé en ce qu'**il comporte la commande au dispositif d'acquisition d'images de l'utilisateur de l'instruction d'allumer ou d'éteindre son flash.

12. Procédé d'authentification selon la revendication 11 **caractérisé en ce que** les moments d'allumage et d'extinction du flash sont déterminés aléatoirement.

13. Procédé d'authentification selon l'une quelconque des revendications précédentes, **caractérisé en ce que** ledit marquage comporte deux zones dont une change plus d'apparence que l'autre pour un même déplacement du point de vue.

14. Procédé d'authentification selon l'une quelconque des revendications précédentes, **caractérisé en ce que** qu'il comporte un moyen mécanique permettant de modifier ledit point de vue sous lequel est ledit marquage pour établir une description 2D ultérieure.

15. Procédé d'authentification selon l'une quelconque des revendications précédentes, **caractérisé en ce que** qu'il comporte une étape préliminaire, comme par exemple la frappe d'un code PIN, qui toit être achevée avec succès pour qu'une description 2D ultérieure puisse être établie.

## Patentansprüche

1. Authentifizierungsverfahren, das aufweist:
• das Speichern einer Vielzahl von ursprünglichen 2D-Beschreibungen der Authentifizierungsmittel (1), die Elemente aufweisen, die das Licht beeinflussen, die als Störelemente (111, 112) bezeichnet werden, wobei die ursprünglichen 2D-Beschreibungen voneinander verschiedenen Blickpunkten entsprechen, die als benachbarte Blickpunkte bezeichnet werden
• das Authentifizieren, das darin besteht, eine als nachfolgend bezeichnete 2D-Beschreibung eines Authentifizierungsmittels (1) zu erstellen und diese nachfolgende Beschreibung mit einer als ursprünglich bezeichneten Beschreibung des Authentifizierungsmittels zu vergleichen,
**dadurch gekennzeichnet, dass** während des Authentifizierungsprozesses:
• das Authentifizierungsmittel (1) betrachtet wird, ohne dass das Erfassungsmittel an einem genauen Ort platziert werden muss, wobei der Benutzer einen Authentifizierungsprozess ausführen kann, indem er das Erfassungsmittel zu Beginn an einem unvorhergesehenen Ort platziert,
• die nachfolgende 2D-Beschreibung mit einer der ursprünglichen 2D-Beschreibungen verglichen wird, die aus einer Erfassung erstellt wird, die mit einem Erfassungsmittel von einem Blickpunkt aus ausgeführt wird, der unter den an dem Blickpunkt am nächsten gelegenen ist, von dem die nachfolgende 2D-Beschreibung der Markierung in Bezug auf das Authentifizierungsmittel erstellt wird, wobei präzisiert wird, dass man unter der vorstehend genannten 2D-Beschreibung einer Markierung eine zweidimensionale Beschreibung des Erscheinungsbilds des Authentifizierungsmittels von einem bestimmten Blickpunkt aus versteht.

2. Authentifizierungsverfahren nach Anspruch 1, **dadurch gekennzeichnet, dass** die Sichtbereiche der Erfassungsblickpunkte der ursprünglichen Beschreibungen einen im Wesentlichen kontinuierlichen Bereich ausbilden.

3. Authentifizierungsverfahren nach einem der Ansprüche 1 und 2, **dadurch gekennzeichnet, dass** der Vergleich der nachfolgenden 2D-Beschreibung mit mehreren der ursprünglichen 2D-Beschreibungen durchgeführt wird, die benachbarten Blickpunkten entsprechen.

4. Authentifizierungsverfahren nach Anspruch 1, **dadurch gekennzeichnet, dass** aus den ursprünglichen 2D-Beschreibungen durch Berechnung eine dreidimensionale Beschreibung, die als ursprüngliche 3D-Beschreibung der Markierung (11) bezeichnet wird, nachgebildet wird.

5. Authentifizierungsverfahren nach Anspruch 4, **dadurch gekennzeichnet, dass** eine nachfolgende 2D-Beschreibung mit der dem gleichen Blickpunkt entsprechenden 2D-Beschreibung verglichen wird, die aus der ursprünglichen 3D-Beschreibung der Markierung (11) berechnet wird.

6. Authentifizierungsverfahren nach einem der vorstehenden Ansprüche, **dadurch gekennzeichnet, dass** mehrere nachfolgende 2D-Beschreibungen aus mehreren aufeinanderfolgenden Erfassungen ausgeführt werden, die aus verschiedenen Blickpunkten ausgeführt werden.

7. Authentifizierungsverfahren nach Anspruch 6, **dadurch gekennzeichnet, dass** die aufeinanderfolgenden Erfassungen ein Video bilden.

8. Authentifizierungsverfahren nach Anspruch 7, **dadurch gekennzeichnet, dass** dieses Video in Echtzeit an einen Server übertragen wird, der als Authentifizierungsserver bezeichnet wird.

9. Authentifizierungsverfahren nach einem der vorstehenden Ansprüche, **dadurch gekennzeichnet, dass** es das Anzeigen an den Benutzer mehrerer Blickpunkte aufweist, aus denen die nachfolgenden Erfassungen aufeinanderfolgend auszuführen sind.

10. Authentifizierungsverfahren nach Anspruch 9, **dadurch gekennzeichnet, dass** die Blickpunkte, aus denen die nachfolgenden Erfassungen aufeinanderfolgend auszuführen sind, zufällig bestimmt werden.

11. Authentifizierungsverfahren nach einem der vorstehenden Ansprüche, **dadurch gekennzeichnet, dass** es den Befehl an die Bilderfassungsvorrichtung des Benutzers des Anweisens zum Einschalten oder Ausschalten ihres Blitzes aufweist.

12. Authentifizierungsverfahren nach Anspruch 11, **dadurch gekennzeichnet, dass** die Zeitpunkte des Einschaltens und eines Erlöschens des Blitzes zufällig bestimmt werden.

13. Authentifizierungsverfahren nach einem der vorstehenden Ansprüche, **dadurch gekennzeichnet, dass** die Markierung zwei Zonen aufweist, von denen bei einer gleichen Verschiebung des Blickpunkts eine ihr Erscheinungsbild mehr ändert als die andere.

14. Authentifizierungsverfahren nach einem der vorstehenden Ansprüche, **dadurch gekennzeichnet, dass** es ein mechanisches Mittel aufweist, das es ermöglicht, den Blickpunkt, unter dem sich die Markierung befindet, zum Erstellen einer nachfolgenden 2D-Beschreibung zu modifizieren.

15. Authentifizierungsverfahren nach einem der vorstehenden Ansprüche, **dadurch gekennzeichnet, dass** es einen vorausgehenden Schritt, wie beispielsweise die Eingabe eines PIN-Codes, aufweist, der erfolgreich abgeschlossen werden muss, damit eine nachfolgende 2D-Beschreibung erstellt werden kann.

## Claims

1. Authentication method, comprising:
• recording of a plurality of original 2D descriptions of the authentication device (1) comprising interference elements (111, 112) which interfere with the light, said original 2D descriptions corresponding to different viewpoints that are referred to as neighboring viewpoints
• authentication consisting in establishing a subsequent 2D description of an authentication device (1) and comparing this subsequent description with an original description of said authentication device,
**characterized in that** during the authentication procedure:
• the authentication device (1) is observed without needing to place the acquisition means at a precise location, the user being able to carry out an authentication procedure by placing the acquisition means at an unplanned location at the outset,
• said subsequent 2D description is compared with one of said original 2D descriptions established from an acquisition carried out using an acquisition means from a viewpoint of among the closest to the viewpoint from which said subsequent 2D description of said marking is established, with reference to said authentication device, it being specified that the above term, "2D description of a marking," means a description in two dimensions of the appearance of said authentication device from a determined viewpoint.

2. Authentication method according to claim 1, **characterized in that** the fields of vision from said acquisition viewpoints of said original descriptions form a substantially continuous field.

3. Authentication method according to either claim 1 or claim 2, **characterized in that** said comparison of said subsequent 2D description is performed using a plurality of said original 2D descriptions corresponding to neighboring viewpoints.

4. Authentication method according to claim 1, **characterized in that** a three-dimensional description, which is referred to as the original 3D description of said marking (11), is reconstituted by means of calculation on the basis of said original 2D descriptions.

5. Authentication method according to claim 4, **characterized in that** a subsequent 2D description is compared with the 2D description corresponding to the same viewpoint, calculated from said original 3D description of said marking (11).

6. Authentication method according to any of the preceding claims, **characterized in that** a plurality of subsequent 2D descriptions are produced from a plurality of successive acquisitions which are produced from different points of view.

7. Authentication method according to claim 6, **characterized in that** said successive acquisitions constitute a video.

8. Authentication method according to claim 7, **characterized in that** this video is transmitted in real time to a server which is referred to as the authentication server.

9. Authentication method according to any of the preceding claims, **characterized in that** it comprises indicating a plurality of viewpoints from which to successively carry out said subsequent acquisitions to the user.

10. Authentication method according to claim 9, **characterized in that** said viewpoints from which to successively carry out said subsequent acquisitions are determined randomly.

11. Authentication method according to any of the preceding claims, **characterized in that** it comprises sending a command to the user's image acquisition device with the instruction to switch on or switch off its flash.

12. Authentication method according to claim 11, **characterized in that** the switching on and switching off times of the flash are determined randomly.

13. Authentication method according to any of the preceding claims, **characterized in that** said marking comprises two zones, one of which changes more in appearance than the other for the same movement of the viewpoint.

14. Authentication method according to any of the preceding claims, **characterized in that** it comprises a mechanical means which makes it possible to modify which viewpoint said marking is under in order to establish a subsequent 2D description.

15. Authentication method according to any of the preceding claims, **characterized in that** it comprises a preliminary step, such as entering a PIN code, which must be completed successfully so that a subsequent 2D description can be established.
